# EUROPÄISCHE PATENTSCHRIFT

(11) **EP 2 056 067 B1**
(45) Veröffentlichungstag und Bekanntmachung des Hinweises auf die Patenterteilung: **10.12.2014**
(21) Anmeldenummer: 08166629.9
(22) Anmeldetag: 15.10.2008
(51) Int. Cl.: G01C 15/00, G02B 3/00

(54) **Anordnung zum Abbilden einer linienförmigen Markierung**
Arrangement to depict a line-shaped marking
Agencement destiné à représenter un marquage en forme de lignes

(30) Priorität: 01.11.2007 DE 202007015265 U
(43) Veröffentlichungstag der Anmeldung: 06.05.2009
(73) Patentinhaber: Stabila Messgeräte Gustav Ullrich GmbH, 76855 Annweiler (DE)
(72) Erfinder: Kallabis, Gabriel, 76848, Spirkelbach (DE); Weber, Andreas, 76848, Wilgartswiesen (DE)
(74) Vertreter: Stoffregen, Hans-Herbert

(56) Entgegenhaltungen:
- EP-A1- 1 519 147
- EP-A2- 1 795 863
- DE-A1- 4 320 177
- DE-U1-202004 007 476
- US-A1- 2006 117 584

## Beschreibung

Die Erfindung bezieht sich auf eine Anordnung zum Abbilden einer linienförmigen optischen Markierung auf einer Fläche, wie Begrenzungs- wie Wandfläche eines Raumes, umfassend eine parallele Laserstrahlung emittierende Laserdiode sowie eine im Weg der Strahlung angeordnete erste Linse mit einer ersten und einer zweiten von der Strahlung durchsetzten Fläche, von denen eine einen aus gekrümmten Abschnitten unterschiedlicher Radien zusammengesetzten wie im Schnitt zumindest bereichsweise parabel- bzw. ellipsenförmigen Verlauf aufweist, der sich symmetrisch zu einer Symmetrieebene der Linse erstreckt, entlang der die parallel gerichtete Strahlung verläuft, wobei die Erstreckung des Lichtbündels senkrecht zu der Symmetrieebene gleich oder kleiner als Breite B der Linse senkrecht zu der Symmetrieebene ist und das Lichtbündel vollständig auf die erste Fläche auftrifft.

Aus der DE-A-102 17 108 ist eine Laserstrahlvorrichtung bekannt, die in der Bauindustrie zum Einsatz gelangt. Um ohne Unterbrechung eine über einen weiten Winkel verlaufende Linie zu erzeugen, ist vorgesehen, dass ein eine Kollimator-Linse durchsetzendes Laserstrahlenbündel auf eine Stablinse fällt, die lichtquellenseitig eine semitransparente Fläche aufweist, um einen linienförmigen Lichtstrahl in Richtung der Lichtquelle zu reflektieren. Das nicht reflektierte Licht durchsetzt sodann eine vollständig transparente lichtquellenabgewandte Fläche der Stablinse und wird gebrochen, um in einer zur ersten Richtung entgegengesetzten zweiten Richtung einen linienförmigen Lichtstrahl zu erzeugen.

Um eine Linie sichtbaren Lichts auf einer Fläche abzubilden, die unmittelbar vor einem die Lichtquelle aufnehmenden Gehäuse beginnt, sind nach der US-B-6 502 319 mehrere Zylinderlinsen bzw. Spiegel vorgesehen, mittels derer der von der Lichtquelle emittierte Lichtstrahl im erforderlichen Umfang aufgefächert wird.

Lichtstrahlennivelliergeräte nach dem DE-U-203 04 117 und dem DE-U-203 04 114 weisen vor einer Lichtquelle, über der ein linienförmiger Lichtstrahl erzeugt werden soll, Zeilenlinsen auf, die aus Abschnitten unterschiedlicher Brennweiten zusammengesetzt sind.

Um unterhalb einer optischen Markierungsvorrichtung auf ein Werkstück zwei sich unter einem rechten Winkel schneidende Linien zu erzeugen, werden nach der DE-C-199 53 114 zwei seitliche nebeneinander angeordnete Projektionseinrichtungen vorgeschlagen, die jeweils eine Lichtquelle und eine in deren Strahlengang angeordnete Optik umfassen.

Um einen Lichtstrahl aufzufächern, ist nach der US-A-3 984 154 eine Linse vorgesehen, die die Form eines Hohlzylinderabschnitts aufweist, auf dessen eine Kantenfläche ein kollimierter Laserstrahl auftrifft. Damit das Licht im hinreichenden Umfang nach außen reflektiert wird, weist die Innenfläche der Linse eine reflektierende Schicht auf.

Zur Erzeugung linienförmiger Markierungen wird nach der JP-A-2004094123 eine Stablinse benutzt, deren Außenfläche abschnittsweise eine reflektierende Schicht aufweist, so dass auf diese auftreffendes Licht unmittelbar reflektiert wird. In den Bereichen, in denen eine entsprechende Reflexionsschicht nicht vorgesehen ist, kann Licht die Linse durchsetzen.

Eine nach der US-B-6 935 034 zum Auffächern eines Laserstrahls benutzte Linse weist eine quaderförmige Geometrie mit lichtquellenabgewandter abgerundeter Kante auf, um eine gewünschte Auffächerung des die Linse durchsetzenden Lichtes zu erreichen.

Ein Kreuzlinienlaser ist der EP-A-1 795 863 zu entnehmen. Die verwendeten Linsen weisen eine erste plane Fläche auf, auf die ein Laserstrahl auftrifft, um sodann an der strahlabgewandten im Schnitt einen Ellipsenabschnitt bildenden Fläche gebrochen zu werden, wodurch eine optische Linie erzeugt wird, die als Markierung auf eine Fläche projeziert wird. Die Intensitätsverteilung entlang der Linie ist nicht gleichmäßig. Vielmehr ist im Mittenbereich der Linie die Intensität am größten und nimmt nach außen hin ab.

Um einen Laserstrahl linienförmig aufzufächern, trifft nach der US-A-5,782,093 ein Laserstrahl auf die ebene Rückseite einer Halbzylinderlinse.

Eine refraktiv-diffraktive Hybridlinse zur Strahlformung von Hochleistungsdiodenlasern ist aus der DE-A-103 54 780 bekannt. Dabei setzt sich die Linse aus einem quaderförmigen Abschnitt und einem Zylinderabschnitt zusammen, der zunächst von der Strahlung durchsetzt wird.

Eine Vorrichtung zum Abbilden einer linienförmigen optischen Markierung nach der DE-U-20 2004 007 476 weist eine von einer Strahlung durchsetzte rinnenförmige Linse auf, deren gebogenen Abschnitte zu beiden Seiten einer Ebene verlaufen, die sich senkrecht zu der auf die Linse auftreffende Strahlung erstreckt.

Nach der DE-A-195 28 198 trifft ein Laserstrahl auf eine Zylinderlinse, um über diese linienförmig auf Sensoren abgebildet zu werden, mit denen die Intensitätsverteilung des Laserstrahls gemessen wird.

Der DE-A-43 20 177 ist eine optische Vorrichtung zur Erzeugung einer Linie zu entnehmen. Dabei trifft ein Laserstrahl auf die Kante eines Dachkantenprismas, die als asphärische Zylinderlinse ausgebildet ist.

Der vorliegenden Erfindung liegt die Aufgabe zugrunde, eine Anordnung der eingangs genannten Art so weiterzubilden, dass eine Linie erzeugt werden kann, die relativ lang ist und eine über einen weiten Bereich gleichmäßige Intensitätsverteilung aufweist, insbesondere eine im Vergleich zu bekannten Anordnungen gleichmäßigere Intensitätsverteilung.

Die Aufgabe wird erfindungsgemäß im Wesentlichen dadurch gelöst,
dass zwischen der Strahlenquelle und der ersten Linse eine zweite Linse angeordnet ist, die von der von der Strahlenquelle emittierten Laserstrahlung ein langgestrecktes ellipsenartiges Lichtbündel erzeugt, dessen Längsachse senkrecht zur Symmetrieebene der ersten Linse verläuft,
dass die aus den Abschnitten unterschiedlicher Radien bestehende gekrümmte erste Fläche der ersten Linse der Strahlung zugewandt ist und über den gesamten von dem Lichtbündel beaufschlagten Bereich einen konvexen Verlauf aufweist, und
dass die zweite Fläche plan ist und senkrecht zur Symmetrieebene verläuft oder
dass die zweite Fläche gewölbt ist.

Abweichend von vorbekannten ein Lichtbündel in eine Linie brechenden, d. h. auffächernden und eine Flachseite aufweisenden Linsen erfolgt erfindungsgemäß die Brechung an zwei Konturen, d. h. Flächen, von denen die erste gekrümmt ist, wodurch nicht nur eine gleichmäßigere Intensitätsverteilung entlang der Linie erfolgt, sondern im Vergleich zu Linsen bei gleicher Baugröße, bei denen eine Brechung nur an einer Fläche erfolgt, eine wesentlich längere Linie erzeugt wird.

Die erfindungsgemäße Vergleichmäßigung der Lichtintensität entlang der Linie hat auch den Vorteil, dass man insgesamt mehr Leistung in die Laserlinie einbringen kann, ohne schon im mittleren Bereich der Linie die Lasersicherheitsklasse zu überschreiten.

Insbesondere ist vorgesehen, dass die Lichtquelle - ggf. mit einer zugeordneten Optik - ein langgestrecktes ellipsenartiges Lichtbündel emittiert, dessen Längsachse senkrecht zu der Symmetrieebene verläuft. Dabei sollte das Lichtbündel symmetrisch zur Symmetrieachse verteilt auf die erste Fläche auftreffen, wobei bevorzugterweise die Längenerstreckung L des Lichtbündels zur Breitenerstreckung B der Linse senkrecht zur Symmetrieebene sich beläuft auf 2 : 3 ≤ L : B ≤ 1 : 1. Können höhere Verluste oder ein schlechterer Wirkungsgrad in Kauf genommen werden, kommen selbstverständlich auch abweichende Werte in Frage.

Des Weiteren sollte zur Optimierung der erzeugten optischen Linie die erste Fläche derart gekrümmt sein, dass der maximale Brechwinkel α beträgt 50° ≤ α ≤ 0°, insbesondere 55° ≤ α ≤ 70°.

Die erste Fläche sollte im Scheitelpunkt einen Krümmungsradius r1 mit 0,45 mm ≤ r1 < 1,1 mm aufweisen. Die Werte sind material- und brechungsindexabhängig, so dass auch andere Wertebereiche in Frage kommen.

Um zu vermeiden, dass die optische Linie unscharf wirken kann, ist vorgesehen, dass die erste Fläche reflexionsmindernd ausgebildet oder mit einer entsprechenden Schicht versehen ist.

Die zweite Fläche kann einen Krümmungsradius r2 mit 15 mm ≤ 2 ≤ 25 mm aufweisen.

Des Weiteren sieht die Erfindung vor, dass die Laserdiode polarisiertes Licht emittiert. Dabei sollte insbesondere eine Strahlung benutzt werden, die parallel zur Längsachse des ellipsenförmigen Lichtbündels polarisiert ist. Die Erfindung wird jedoch auch dann nicht verlassen, wenn eine Polarisation senkrecht zur Längsachse des Lichtbündels erfolgt.

Die Linse selbst kann aus Kunststoff insbesondere in Form eines Spritzgussteils bestehen.

In Weiterbildung sieht die Erfindung vor, dass die zweite Fläche diffraktiv ausgebildet oder mit einem diffraktiven Element versehen ist.

Insbesondere zeichnet sich die Erfindung durch ein Kreuzlinienlasergerät dadurch aus, dass eine erste erfindungsgemäße Anordnung zur Erzeugung einer ersten linienförmigen optischen Markierung und eine zweite erfindungsgemäße Anordnung zur Erzeugung einer zweiten linienförmigen optischen Markierung, die senkrecht zu der ersten linienförmigen optischen Markierung verläuft, als Einheit schwerkraftbedingt pendelnd oder motorisch verstellbar in einem Gehäuse angeordnet sind.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Seitenansicht eines Kreuzlinienlasergeräts,
- Fig. 2: eine Vorderansicht des Kreuzlinienlasergerätes gemäß Fig. 1,
- Fig. 3: einen Querschnitt durch eine erfindungsgemäße Linse,
- Fig. 4: eine Prinzipdarstellung eines Strahlungsgangs durch eine erfindungsgemäße Linse,
- Fig. 5: eine Vorderansicht der Linse gemäß Fig. 4,
- Fig. 6: eine Prinzipdarstellung des Strahlungsgangs durch eine Ausführungsform einer erfindungsgemäßen Linse,
- Fig. 7: eine Prinzipdarstellung eines Strahlungsgangs durch eine weitere Ausführungsform einer erfindungsgemäßen Lehre,
- Fig. 8: Intensitätsverteilungen von durch Linsen aufgefächerte Strahlungen und
- Fig. 9 - 11: Prinzipdarstellungen von Strahlungen, die Linsen nach dem Stand der Technik durchlaufen.

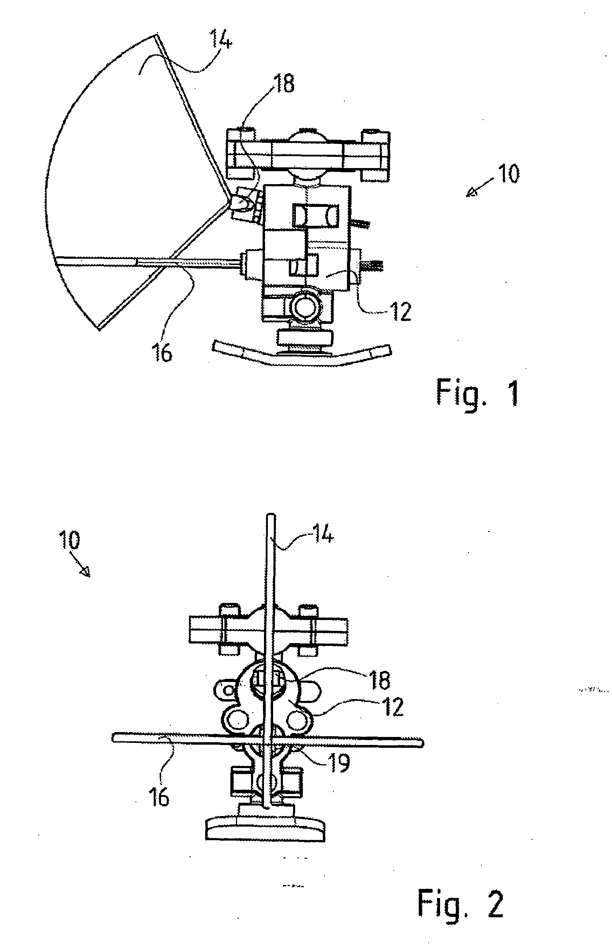

Um insbesondere im Baubereich Linien bzw. sich kreuzende Linien als Hilfslinien für durchzuführende Arbeiten abzubilden, werden Linien- bzw. Kreuzlinienlasergeräte benutzt. In den Fig. 1 und 2 ist rein prinzipiell eine in einem Gehäuse eines Linien- bzw. Kreuzlinienlasergerätes pendelnd aufgehängte Anordnung umfassend Laserdioden mit vorgeschalteter Optik dargestellt, die insgesamt als Pendel 10 bezeichnet werden kann. Dabei geht das Pendel 10 von einer Lagerung 12 aus. Mittels der Lichtquellen wie Laserdioden und der vorgeschalteten Optik werden bei einem Kreuzlinienlaser sodann über speziell geformte Linsen zwei sich unter einem Winkel von 90° schneidende Linien 14, 16 erzeugt, die auf eine Fläche projezierbar sind.

Hierzu wird die von der Laserdiode emittierte Strahlung auf eine Linse 18, 19 gerichtet, durch die die Laserstrahlung zur Bildung der Linien 14, 16 gebrochen wird.

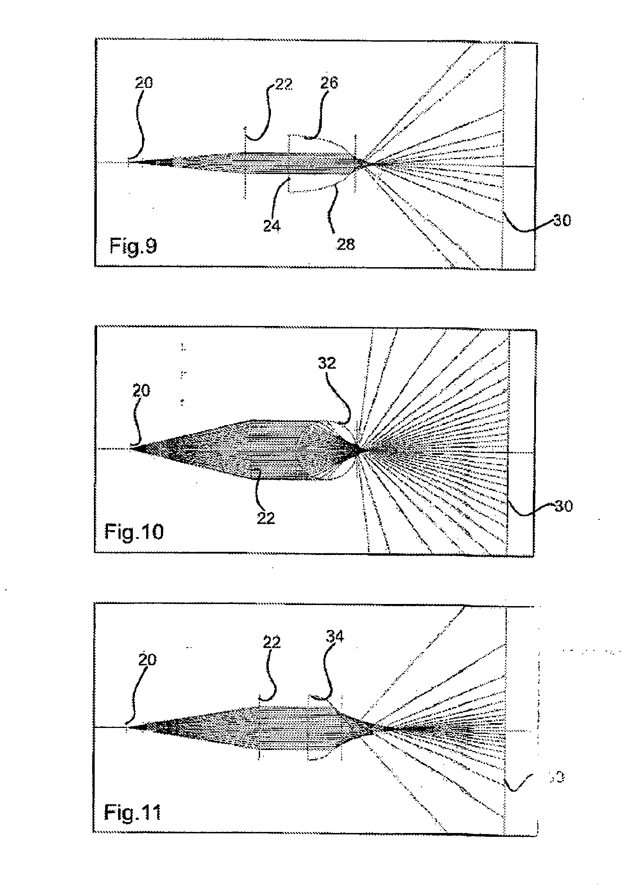

Nach dem Stand der Technik eingesetzte Linsen sind rein prinzipiell in den Fig. 9 - 11 mit den zugeordneten Strahlengängen dargestellt. Dabei werden für gleiche Elemente gleiche Bezugszeichen benutzt.

Die von einer Laserdiode stammende Strahlung wird mittels einer Linse 22 parallel ausgerichtet, um senkrecht eine plane Begrenzungsfläche 24 einer Linse 26 zu durchsetzen, die rückseitig eine Fläche 28 aufweist, die aus Abschnitten mit voneinander abweichenden Krümmungsradien besteht und insbesondere im Schnitt eine Ellipsenform aufweist. Eine diesbezügliche Linse entsprechend der EP-A-1 795 863 bewirkt folglich ein Brechen der Strahlung nur an einer Kontur, und zwar an der gekrümmten Fläche 28. Hierdurch bedingt ergibt sich eine Linie 30, die z. B. auf einer Wandfläche abgebildet wird, die eine ungleichmäßige Leistungs- bzw. Intensitätsverteilung zeigt, wie dies durch die Abstände der Strahlen rein prinzipiell verdeutlicht werden soll.

In Fig. 10 ist eine Zylinderlinse 32 dargestellt, auf die ein Bündel paralleler Strahlen trifft, wobei durch die Zylindergeometrie bedingt ein Brechen derart erfolgt, dass gleichfalls die auf einer Fläche projizierte Line 30 entlang ihrer Längsachse in ihrer Intensität variiert, d. h. im Randbereich erheblich schwächer als im Mittenbereich ist. Eine entsprechende Zylinderlinse ist z. B. aus der DE-A-102 17 108 bekannt.

Eine durch einen Zylinderabschnitt gebildete Linse 34 gemäß Fig. 11 zeigt gleichfalls eine ungleichmäßige Intensitätsverteilung entlang der Linie 30, wie der Abstand der Einzelstrahlen prinzipiell vermitteln soll. Dabei ist im Vergleich zu den Ausführungsformen der Fig. 9 - 10 entlang der optischen Achse die Intensität um ein Vielfaches größer als im Randbereich. Eine entsprechende Linse ist z. B. aus der US-A-5,782,003 bekannt.

Erfindungsgemäß wird eine Linse 36 zur Erzeugung einer linienförmigen optischen Markierung vorgeschlagen, die entsprechend den Darstellungen 4, 6 und 7 zwei brechende Konturen, also Flächen 38, 40 aufweist, von denen die strahlzugewandte Fläche sich aus Abschnitten unterschiedlicher Krümmungsradien zusammensetzt und im Schnitt quasi die Form einer Hyperbel bzw. Ellipse aufweist. Dies ergibt sich aus den Figuren rein prinzipiell. Die entsprechende auch als erste Fläche bezeichnete Fläche 38 setzt sich aus symmetrisch zu einer Symmetrieebene 42 verlaufende Bereiche 44, 46 zusammen.

Spannt man durch die Linse 36 ein kartesisches Koordinatensystem mit X-, Y- und Z-Achse auf, wobei die Z-Achse senkrecht zur Zeichenebene verläuft, so weisen sowohl die erste als auch die zweite Fläche 38, 40 X- und Y-Koordinaten auf, die jeweils zumindest in einem Abschnitt der Z-Achse unabhängig von den Z-Koordinaten sind. Die erste Fläche 38 weist in der X-Y-Ebene des Koordinatensystems Abschnitte unterschiedlicher Radien auf.

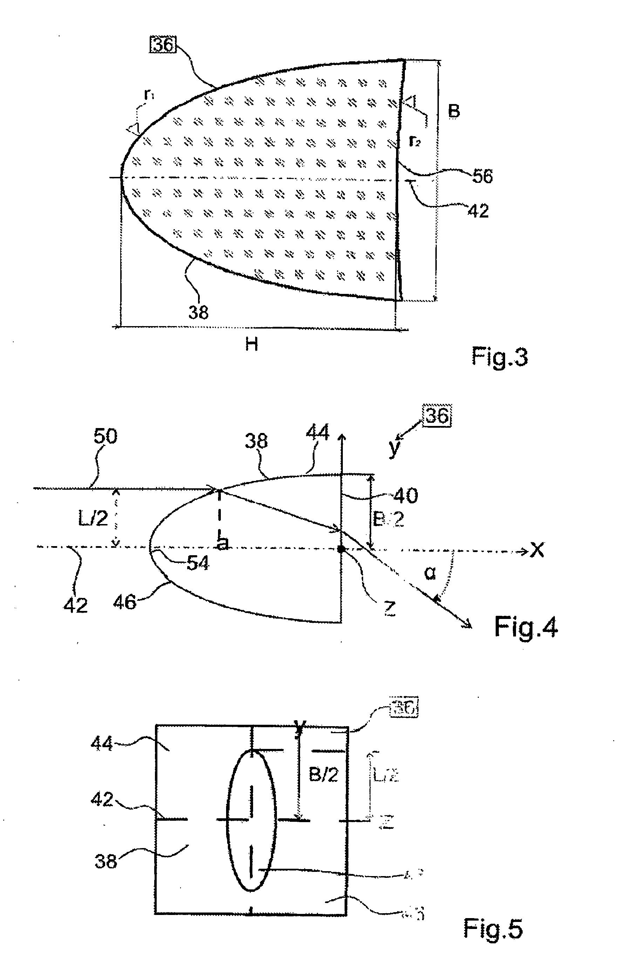

Das entsprechend der Darstellung gemäß Fig. 9 - 11 von einer Lichtquelle wie Laserdiode 20 stammende Strahlbündel besteht aus parallel zur X-Achse und damit zu der in der X-Z-Ebene verlaufenden Symmetrieebene 42 verlaufenden Strahlen, die auf die erste Fläche 38, d. h. die symmetrisch zur Symmetrieebene 42 verlaufenden Bereiche 44, 46 auftreffen. Entsprechend der Darstellung der Fig. 5, die eine Vorderansicht der Linse 36, also eine Draufsicht der Fläche 38 mit den Abschnitten 44, 46 wiedergibt, bilden die Strahlen ein im Schnitt eine Ellipsenform zeigendes Strahlenbündel 48, dessen Längsachse entlang der Y-Achse ausgerichtet ist, also senkrecht zur Symmetrieebene 42 verläuft. Dabei sollten die äußeren Randstrahlen, also die die Scheitelpunkte des Strahlenbündels 48 bildenden Strahlen 50 einen Abstand L zueinander, also einen Abstand L/2 von der X-Achse bzw. Symmetrieebene 42 aufweisen, der kleiner als maximale Breite B der Linse 36 quer zur Symmetrieebene 42, also entlang der Y-Achse ist. Diese maximale Breite wird durch die Rückseitenfläche 40 vorgegeben. In der zeichnerischen Darstellung ist nur der obere Randstrahl 50 dargestellt.

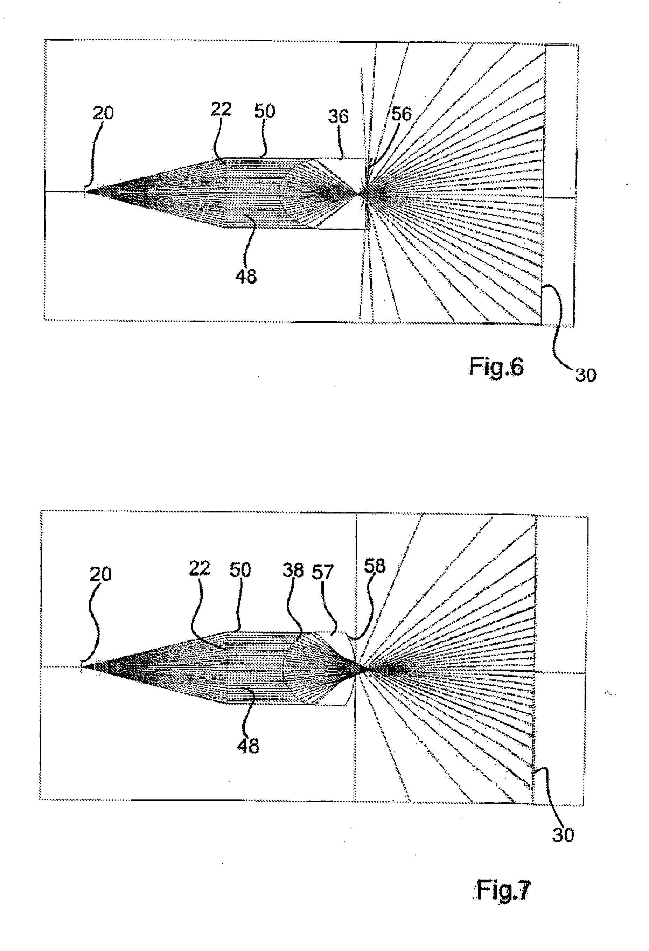

Bevorzugterweise ist L in etwa 2/3 von B oder größer, gleichwenn entsprechend der Prinzipdarstellungen der Fig. 6 und 7 das Strahlenbündel 48 eine Länge aufweisen kann, die gleich der Breite der Linse 36 ist.

Besonders gleichmäßige Intensitätsverteilungen ergeben sich dann, wenn das Lichtbündel 48 die Fläche 38 im Abstand a vom Scheitelpunkt 54 der Fläche 38 die Fläche 38 vollständig beaufschlagt, wobei insbesondere 0,5 L ≤ a ≤ 1,5 L ist.

Bevorzugterweise ist die Fläche 38 derart gekrümmt, dass der Brechungwinkel α der Randstrahlen 50 im Bereich zwischen 50° und 80°, insbesondere zwischen 55° und 70° liegt. Des Weiteren sollte die Fläche 38 im Scheitelpunkt 54 eine Krümmung r1 zwischen 0,45 mm und 1,1 mm aufweisen.

Ist gemäß der Darstellung der Fig. 4 die Rückseitenfläche 14 plan ausgebildet, so kann entsprechend der Prinzipdarstellung der Fig. 3 die Linse 36 mit einer Rückseitenfläche 56 versehen sein, die einen konkaven Verlauf aufweist, also nach innen gekrümmt ist. Dabei sollte die Fläche 56 gleichfalls symmetrisch zur Symmetrieebene 42 verlaufen und einen Radius zwischen 19 mm und 21 mm besitzen.

Typische Abmessungen der Linse 36 sind der Fig. 3 zu entnehmen. So kann die Linse in X-Richtung eine Höhe H im Bereich zwischen 4 und 7 mm aufweisen, wohingegen die Breite B im Bereich von 4 mm bis 6 mm liegt. Des Weiteren kann die erste Fläche 38 mit einer reflexionsmindernden Beschichtung versehen sein, um das Reflektieren von Strahlen an der Oberfläche zu minimieren.

Aus den Fig. 6 und 7 soll der prinzipielle Verlauf der durch eine erfindungsgemäße Linse gebrochenen Strahlen verdeutlicht werden, um auf einer Fläche eine Linie 30 zu projizieren, die über ihre Länge eine gleichmäßige Intensitätsverteilung zeigt. Dabei entspricht die in Fig. 6 wiedergegebene dargestellte Linse derjenigen der Fig. 3 und ist mit dem Bezugszeichen 36 gekennzeichnet.

Eine der Fig. 7 zu entnehmende Linse 57 kommt bezüglich der ersten Fläche 38 der zuvor beschriebenen Linse 36 gleich. Die strahlabgewandte zweite Fläche 58 ist demgegenüber konvex geformt und kann einen Krümmungsradius zwischen 15 und 25 mm aufweisen.

Des Weiteren wird aus den Fig. 6 und 7 deutlich, dass die Fläche 36 keinen Brennpunkt, sondern eine Brennlinie erzeugt, die innerhalb, außerhalb oder sowohl innerhalb als auch außerhalb der Linse 36 liegen kann.

Unabhängig hiervon besteht die Möglichkeit, dass die zweite Fläche 40, 56, 58 diffraktiv ausgebildet oder mit einem diffraktiven Element versehen ist.

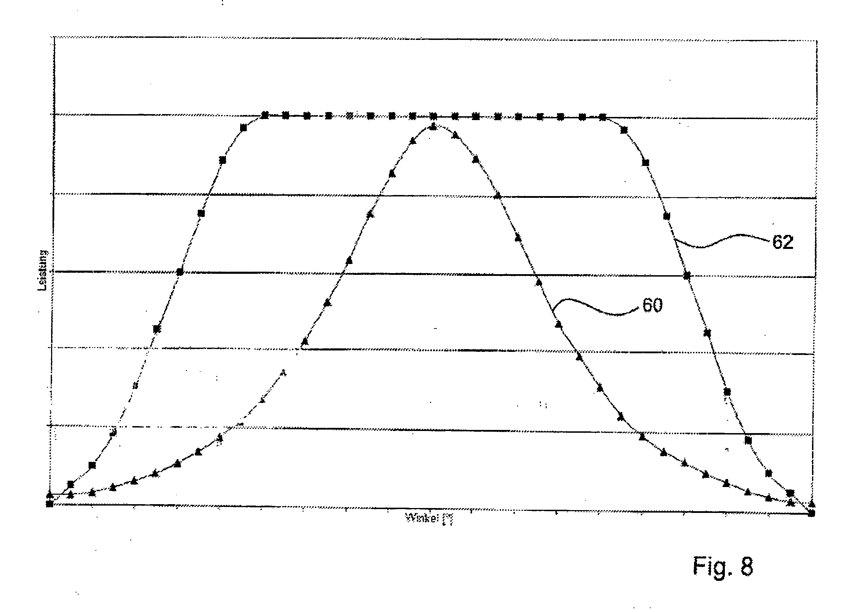

Dass mit den erfindungsgemäßen Linsen 36, 38 eine gleichmäßige Intensitätsverteilung entlang der Linie 30 erzielbar ist, soll anhand der Fig. 8 verdeutlicht werden. So stellt die Kurve 60, die durch die ausgefüllten Dreiecke gebildet wird, eine Intensitätsverteilung einer Zylinderlinse dar, wie diese der Fig. 11 zu entnehmen ist. Erkennbar fällt die Intensität von der Mitte der Kurve 60 nach außen hin stark ab. Will man folglich im Randbereich der Linie eine hinreichende Intensität erzielen, so würde die Intensität im Mittenbereich so stark sein, dass ggf. eine Gefährdung für den Benutzer besteht. Demgegenüber ergibt sich für eine Linie, die mit einer erfindungsgemäßen Linse 36, 38 projezierbar ist, über einen großen Winkelbereich eine gleich bleibende Intensität, wie die durch die ausgefüllten Quadrate repräsentierte Kurve 62 vermittelt. Somit ergibt sich der Vorteil, dass insgesamt vergleichmäßigt mehr Leistung über die gesamte Linie einbringbar ist mit der Folge, dass auch im größeren Winkelbereich eine ausreichende Intensität erzielt wird, ohne dass im mittleren Bereich die Lasersicherheitsklasse überschritten werden muss. Somit besteht keine Gefährdung für einen Benutzer.

## Patentansprüche

1. Anordnung zum Abbilden einer linienförmigen optischen Markierung auf einer Fläche, wie Begrenzungs- wie Wandfläche eines Raumes, umfassend eine parallele Laserstrahlung emittierende Laserdiode (20) sowie eine im Weg der Strahlung angeordnete erste Linse (18, 19, 36, 57) mit einer ersten und einer zweiten von der Strahlung durchsetzten Fläche (38, 40, 44, 46, 56, 58), von denen eine einen aus gekrümmten Abschnitten unterschiedlicher Radien zusammengesetzten wie im Schnitt zumindest bereichsweise parabel- bzw. ellipsenförmigen Verlauf aufweist, der sich symmetrisch zu einer Symmetrieebene (42) der Linse erstreckt, entlang der die parallel gerichtete Strahlung verläuft, wobei die Erstreckung des Lichtbündels senkrecht zu der Symmetrieebene (42) gleich oder kleiner als Breite B der Linse (18, 19, 36, 57) senkrecht zu der Symmetrieebene ist und das Lichtbündel (48) vollständig auf die erste Fläche auftrifft,
**dadurch gekennzeichnet,**
**dass** zwischen der Strahlenquelle und der ersten Linse (18, 19, 36, 57) eine zweite Linse angeordnet ist, die von der von der Strahlenquelle emittierten Laserstrahlung ein langgestrecktes ellipsenartiges Lichtbündel (48) erzeugt, dessen Längsachse senkrecht zur Symmetrieebene (42) der ersten Linse verläuft,
**dass** die aus den Abschnitten unterschiedlicher Radien bestehende gekrümmte erste Fläche (38) der ersten Linse der Strahlung zugewandt ist und über den gesamten von dem Lichtbündel beaufschlagten Bereich einen konvexen Verlauf aufweist, und dass die zweite Fläche (40) plan ist und senkrecht zur Symmetrieebene (42) verläuft oder
gewölbt ist.

2. Anordnung nach Anspruch 1,
**dadurch gekennzeichnet,**
**dass** die zweite Fläche (56, 58) ein Abschnitt einer Zylinderfläche ist und insbesondere einen Krümmungsradius r 2 mit 15 mm ≤ r 2 ≤ 25 mm aufweist.

3. Anordnung nach Anspruch 1,
**dadurch gekennzeichnet,**
**dass** die Strahlenquelle (20) polarisiertes Licht wie Laserlicht emittiert, wobei insbesondere das Laserlicht parallel oder senkrecht zur Längsachse des Lichtbündels (48) polarisiert ist.

4. Anordnung nach zumindest einem der vorhergehenden Ansprüche,
**dadurch gekennzeichnet,**
**dass** das Lichtbündel (48) symmetrisch zu der Symmetrieebene (42) verteilt auf die erste Fläche (36) auftrifft.

5. Anordnung nach zumindest einem der vorhergehenden Ansprüche,
**dadurch gekennzeichnet,**
**dass** die Längenerstreckung L des Lichtbündels (48) sich zur Breite B der Linse (36) senkrecht zur Symmetrieebene (42) verhält wie 2 : 3 ≤ L : B ≤ 1 : 1.

6. Anordnung nach zumindest einem der vorhergehenden Ansprüche,
**dadurch gekennzeichnet,**
**dass** die erste Fläche (38) derart gekrümmt ist, dass das Lichtbündel (48) im Abstand a vom Scheitelpunkt (54) der ersten Fläche vollständig auf die erste Fläche auftrifft, wobei 0,5 L ≤ a ≤ 1,5 L ist.

7. Anordnung nach zumindest einem der vorhergehenden Ansprüche,
**dadurch gekennzeichnet,**
**dass** die erste Fläche (38) derart gekrümmt ist, dass die im Scheitelpunkt des Strahlenbündels (48) verlaufenden äußeren Randstrahlen derart gebrochen sind, dass der Brechwinkel α zur Symmetrieebene (42) beträgt 50° ≤ α ≤ 80°, insbesondere 55° ≤ α ≤ 70°.

8. Anordnung nach zumindest einem der vorhergehenden Ansprüche,
**dadurch gekennzeichnet,**
**dass** die erste Fläche (38) im Scheitelpunkt (54) einen Krümmungsradius r1 mit 0,45 mm ≤ r1 ≤ 1,1 mm aufweist.

9. Anordnung nach zumindest einem der vorhergehenden Ansprüche,
**dadurch gekennzeichnet,**
**dass** die erste Fläche (38) reflexionsmindernd ausgebildet bzw. mit einer reflexionsmindemden Schicht versehen ist.

10. Anordnung nach zumindest einem der vorhergehenden Ansprüche,
**dadurch gekennzeichnet,**
**dass** die Linse (36, 57) aus Kunststoff besteht und insbesondere ein Spritzgussteil ist.

11. Anordnung nach zumindest einem der vorhergehenden Ansprüche,
**dadurch gekennzeichnet,**
**dass** die zweite Fläche (40, 56, 58) diffraktiv ausgebildet oder mit einem diffraktiven Element versehen ist.

12. Kreuzlinienlasermessgerät umfassend eine erste Anordnung nach zumindest einem der vorhergehenden Ansprüche zur Erzeugung einer ersten linienoptischen Markierung (14) und eine zweite Anordnung nach zumindest einem der vorhergehenden Ansprüche zur Erzeugung einer zweiten linienförmigen optischen Markierung (16), die senkrecht zu der ersten linienförmigen optischen Markierung verläuft, wobei die erste Anordnung und die zweite Anordnung als Einheit schwerkraftbedingt pendelnd oder motorisch verstellbar in einem Gehäuse des Kreuzlinienlasermessgerätes angeordnet sind.

## Claims

1. Arrangement for depicting a linear-shaped optical marking on a surface, such as a peripheral surface such as a wall surface of a room, comprising a laser diode (20) emitting a parallel laser radiation, as well as a first lens (18, 19, 36, 57) arranged in the path of the beam having a first and a second surface (38, 40, 44, 46, 56, 58) penetrated by the beam, of which one surface has a parabolic or elliptical run at least partially in cross section, comprised of curved sections of different radii, said run extending symmetrically with respect to a plane of symmetry (42) of the lens, along which runs the beam directed in parallel, wherein the extension of the light bundle perpendicular to the plane of symmetry (42) equals to or is smaller than width B of the lens (18, 19, 36, 57) perpendicular to the plane of symmetry and the light bundle (48) impinges completely on the first surface,
**characterized in**
**that** between the radiation source and the first lens (18, 19, 36, 57) is arranged a second lens which generates from the laser radiation emitted by the radiation source an elongated elliptical light bundle (48), whose longitudinal axis is perpendicular to the plane of symmetry (42) of the first lens,
**that** the curved first surface (38) comprised of sections of different radii is facing the first lens of the radiation and has a convex run over the entire area impinged by the light bundle, and that the second surface (40) is planar and perpendicular to the plane of symmetry (42), or
is arched.

2. Arrangement according to claim 1,
**characterized in**
**that** the second surface (56, 58) is a section of a cylindrical surface and especially has a radius of curvature r 2 with 15 mm ≤ r 2 ≤ 25 mm.

3. Arrangement according to claim 1,
**characterized in**
**that** the radiation source (20) emits polarized light, such as laser light, with especially the laser light being polarized parallel or perpendicular to the longitudinal axis of the light bundle (48).

4. Arrangement according to at least one of the previous claims,
**characterized in**
**that** the light bundle (48) impinges on the first surface (36) distributed symmetrically with respect to the plane of symmetry (42).

5. Arrangement according to at least one of the previous claims,
**characterized in**
**that** the relationship of the longitudinal extension L of the light bundle (48) with respect to the width B of the lens (36) vertical to the plane of symmetry (42) is 2 : 3 ≤ L : B ≤ 1 : 1.

6. Arrangement according to at least one of the previous claims,
**characterized in**
**that** the first surface (38) is curved in such a way that the light bundle (48) impinges fully on the first surface at a distance a from the vertex (54) of the first surface, wherein 0,5 L ≤ a ≤ 1,5 L.

7. Arrangement according to at least one of the previous claims,
**characterized in**
**that** the first surface (38) is curved in such a way that the outer marginal beams running in the vertex of the beam bundle (48) are refracted in such a way that the refraction angle α with respect to the plane of symmetry (42) is 50° ≤ α ≤ 80°, in particular 55° ≤ α ≤ 70°.

8. Arrangement according to at least one of the previous claims,
**characterized in**
**that** the first surface (38) has a radius of curvature r1, with 0,45 mm ≤ r1 ≤ 1,1 mm, in the vertex (54).

9. Arrangement according to at least one of the previous claims,
**characterized in**
**that** the first surface (38) is designed so as to be reflection decreasing, respectively is provided with reflection decreasing layer.

10. Arrangement according to at least one of the previous claims,
**characterized in**
**that** the lens (36, 57) is made of plastic and especially is a die cast component.

11. Arrangement according to at least one of the previous claims,
**characterized in**
**that** the second surface (40, 56, 58) is designed diffractive or is provide with a diffractive element.

12. Crossline laser measuring device comprising a first arrangement according to at least one of the preceding claims for generation of a first linear optical marking (14) and a second arrangement according to at least one of the preceding claims for generation of a second linear optical marking (16), which is vertical to the first linear optical marking, whereby the first arrangement and the second arrangement are arranged in a housing of the crossline laser measuring device so as to be adjustable as a unit by gravity induced oscillation or by means of a motor.

## Revendications

1. Arrangement destiné à représenter un marquage optique linéaire sur une surface, telle qu'une surface de délimitation ou de paroi d'un local, comprenant une diode laser (20) émettant un rayonnement laser parallèle, ainsi qu'une première lentille (18, 19, 36, 57), disposée sur le trajet du rayonnement et ayant une première et une seconde surfaces (38, 40, 44, 46, 56, 58) traversées par le rayonnement, dont l'une présente un profil au moins partiellement parabolique ou elliptique en coupe transversale, composé de segments curvilignes de différents rayons de courbure et qui s'étend symétriquement par rapport à un plan de symétrie (42) de la lentille, plan le long duquel passe le rayonnement parallèle, sachant que l'extension du faisceau lumineux perpendiculairement au plan de symétrie (42) est inférieure ou égale à la largeur B de la lentille (18, 19, 36, 57) perpendiculairement au plan de symétrie, et que le faisceau lumineux (48) est incident dans son intégralité sur ladite première surface,
**caractérisé en ce**
**qu'**entre la source de rayonnement et la première lentille (18, 19, 36, 57) est disposée une seconde lentille qui, à partir du rayonnement laser émis par la source de rayonnement, génère un faisceau lumineux (48) ellipsoïdal allongé, dont l'axe longitudinal s'étend perpendiculairement au plan de symétrie (42) de la première lentille,
**que** la première surface curviligne (38) de la première lentille, constituée de segments de différents rayons de courbure, est orientée sur le rayonnement et présente un profil convexe sur toute la zone exposée au faisceau lumineux, et que la seconde surface (40) est plane et s'étend perpendiculairement au plan de symétrie (42), ou est bombée.

2. Arrangement selon la revendication 1,
**caractérisé en ce**
**que** la seconde surface (56, 58) est une section d'une surface cylindrique et présente en particulier un rayon de courbure r2 tel que 15 mm ≤ r2 ≤ 25 mm.

3. Arrangement selon la revendication 1,
**caractérisé en ce**
**que** la source de rayonnement (20) émet une lumière polarisée telle que de la lumière laser, sachant en particulier que la lumière laser est polarisée parallèlement ou perpendiculairement à l'axe longitudinal du faisceau lumineux (48).

4. Arrangement selon au moins une des revendications précédentes,
**caractérisé en ce**
**que** le faisceau lumineux (48) est incident sur la première surface (36) en étant réparti symétriquement par rapport au plan de symétrie (42).

5. Arrangement selon au moins une des revendications précédentes,
**caractérisé en ce**
**que** le rapport entre l'extension en longueur L du faisceau lumineux (48) et la largeur B de la lentille (36) perpendiculairement au plan de symétrie (42) est tel que 2 : 3 ≤ L : B ≤ 1 : 1.

6. Arrangement selon au moins une des revendications précédentes,
**caractérisé en ce**
**que** la première surface (38) est incurvée de manière telle que le faisceau lumineux (48) est incident dans son intégralité sur la première surface à une distance a du sommet (54) de la première surface, sachant que 0,5 L ≤ a ≤ 1,5 L.

7. Arrangement selon au moins une des revendications précédentes,
**caractérisé en ce**
**que** la première surface (38) est incurvée de manière telle que les rayons marginaux extérieurs s'étendant dans le sommet du faisceau lumineux (48) sont réfractés de manière telle que l'angle de réfraction α par rapport au plan de symétrie (42) est tel que 50° ≤ α ≤ 80°, en particulier 55° ≤ α ≤ 70°.

8. Arrangement selon au moins une des revendications précédentes,
**caractérisé en ce**
**que** la première surface (38) présente au sommet (54) un rayon de courbure r1 tel que 0,45 mm ≤ r1 ≤ 1,1 mm.

9. Arrangement selon au moins une des revendications précédentes,
**caractérisé en ce**
**que** la première surface (38) est conçue de manière à réduire la réflexion ou munie d'une couche réduisant la réflexion.

10. Arrangement selon au moins une des revendications précédentes,
**caractérisé en ce**
**que** la lentille (36, 57) est constituée de matière synthétique, et est en particulier une pièce moulée par injection.

11. Arrangement selon au moins une des revendications précédentes,
**caractérisé en ce**
**que** la seconde surface (40, 56, 58) est conçue de manière diffractive ou munie d'un élément diffractif.

12. Instrument de mesure à laser cruciforme, comprenant un premier arrangement selon au moins une des revendications précédentes, destiné à créer un premier marquage optique linéaire (14), et un second arrangement selon au moins une des revendications précédentes, destiné à créer un second marquage optique linéaire (16) qui s'étend perpendiculairement au premier marquage optique linéaire, sachant que le premier arrangement et le second arrangement en tant qu'unités sont disposés dans un boîtier de l'instrument de mesure à laser cruciforme de manière pendulaire sous l'effet de la pesanteur ou ajustable au moyen de moteurs.
